# EUROPÄISCHE PATENTSCHRIFT

(11) **EP 0 755 108 B1**
(45) Veröffentlichungstag und Bekanntmachung des Hinweises auf die Patenterteilung: **12.05.1999**
(21) Anmeldenummer: 95111531.0
(22) Anmeldetag: 21.07.1995
(51) Int. Cl.: H02H 3/347

(54) **Fehlerstromschutzschaltung in Drehstromsystemen**
Earth leakage protective circuit in three-phase systems
Circuit de courant de défaut à la terre pour systèmes triphasés

(43) Veröffentlichungstag der Anmeldung: 22.01.1997
(73) Patentinhaber: SIEMENS AKTIENGESELLSCHAFT, 80333 München (DE)
(72) Erfinder: Solleder, Reinhard, Dipl.-Ing. (FH), D-93138 Hainsacker (DE); Schmid, Reinhard, Dipl.-Ing., D-93051 Regensburg (DE)

(56) Entgegenhaltungen:
- DE-A- 2 445 917

## Beschreibung

Die Erfindung bezieht sich auf eine Fehlerstromschutzschaltung in Drehstromsystemen, die in der Nähe von Gleichspannungssystemen betrieben wird. Derartige Gleichspannungssysteme weisen beispielsweise elektrische Bahnen auf, wie Stadtbahnen und U-Bahnen. Die Erfindung bezieht sich im einzelnen auf eine Fehlerstromschutzschaltung nach Gattungsbegriff von Patentanspruch 1. Elektrische Bahnen für Personenund Gütertransport, beispielsweise Straßenbahnen, U-Bahnen und Berkwerksbahnen sowie Stadtbahnen, werden häufig über Gleichspannungsnetze versorgt. Derartige Gleichspannungsnetze sind in der Regel über einen Pol geerdet. Entlang derartiger Bahnlinien sind in der Praxis zusätzlich Wechselstrom- oder Drehstromnetze eingerichtet, um für das Strecken- oder Wartungspersonal eine Stromversorgung für Arbeitsmaschinen bereitzustellen. Für die dreipoligen oder einpoligen Steckdosenabgänge derartiger Drehstromnetze werden Fehlerstromschutzschaltungen empfohlen.

Die bewährte Schutzmaßnahme Fehlerstromschutzschaltung kann bei Einsatz pulsstromsensitiver Fehlerstromschutzschalter nach DIN VDE 0664 T1 oder wechselstromsensitiver Geräte durch Gleichströme aus dem Gleichspannungsnetz, die über den Neutralleiter des Drehstromnetzes abfließen, ungünstig beeinflußt werden. Im Arbeitsbereich von Gleichspannungsnetzen können über den Neutralleiter des benachbarten Drehstromsystems gegebenenfalls sehr hohe Gleichströme abfließen, so beispielsweise wenn ein schadhaftes Arbeitsgerät im Bereich einer Gleichspannung führenden Schiene abgelegt wird. Bei einem internen Schluß des Neutralleiters zum PE-Leiter, dem Schutzleiter, besteht dann ein elektrisch leitender Pfad vom Gleichspannung führenden Schienensystem über den Neutralleiter des Drehstromnetzes.

Ein derartiger fehlerhafter Anlagenzustand ist besonders gefährlich, da er unbemerkt so lange fortdauern kann, bis ein Überstromschutzorgan den Gleichstrom im Neutralleiter abschaltet. Hierbei können einige hundert Ampere Gleichstrom bei bis zu 100 Volt Gleichspannung auftreten. Bisherige Schutzmaßnahmen sind unzureichend oder unbefriedigend. Durch Trenntransformatoren, die hier groß und schwer auszuführen sind und kostenintensiv werden, kann man Gleichstromabfluß über den Neutralleiter verhindern. Im Prinzip könnte man auch allstromsensitive Fehlerstromschutzschalter entwickeln, die einen hohen Gleichstrom über den Neutralleiter abschalten könnten. Für derartige Fehlerstromschutzschalter besteht jedoch nur ein vergleichsweise kleines Einsatzgebiet. Hier und im weiteren sollen Fehlerstromschutzschalter und Differenzstromschutzschalter unter dem Begriff Fehlerstromschutzschalter bzw. Fehlerstromschutzschaltung zusammengefaßt werden.

Der Erfindung liegt die Aufgabe zugrunde, eine Schutzschaltung zu entwickeln, bei der Gleichströme im N-Leiter erkannt werden und eine Abschaltung gefährdender Spannung sichergestellt ist.

Die Lösung der geschilderten Aufgabe erfolgt durch eine Fehlerstromschutzschaltung nach Patentanspruch 1. Hierbei können allstromsensitive Fehlerstromschutzschalter eingesetzt werden, wie sie auf dem Markt sind, wobei lediglich im Neutralleiterpfad, bzw. N-Leiter, eine Durchverbindung ohne Schaltkontakte und Schaltkammer vorgesehen ist. Der allstromsensitive Schutzschalter kann auch hohe Gleichströme erkennen, wobei er eine Abschaltung bei Gleichspannung, für die er nicht bestimmt und gebaut ist, nicht vorzunehmen braucht. Wesentlich ist jedoch, daß die Spannung der Außenleiter des Drehstromsystems, früher Phasenleiter genannt, abgeschaltet wird, so daß eine Gefährdung durch eine defekte Arbeitsmaschine vom Drehstromsystem her vermieden wird. Um Spannungsverschleppung über die verhältnismäßig ungefährlichere Gleichspannung zu vermeiden, ist es günstig, den Neutralleiter, bzw. N-Leiter, starr zu erden.

Eine derartige Schutzschaltung mit dem beschriebenen allstromsensitiven Schutzschalter kann in der Praxis vorteilhaft in Reihe zu einem pulsstromsensitiven und/oder wechselstromsensitiven Schalter herkömmlicher Art eingesetzt werden. Hierbei wird eine notwendige Gleichstromschaltleistung durch Fehlerstromschutzschalter in Verbindung mit Schutzschaltern mit Gleichstromschaltvermögen, beispielsweise Leitungsschutzschaltern oder Anbauteilen, erbracht und der N-Leiter durch den allstromsensitiven Schalter ohne Schaltleistung und Schaltmöglichkeit im N-Leiter überwacht. Hier können auch entsprechende Kombinationsgeräte aus Fehlerstrom- und Leitungsschutzschalterbauteilen oder Modulen eingesetzt werden.

Bei geerdetem N-Leiter des Drehstromnetzes, wie sie durch eine starre Erdung sichergestellt ist, kann eine Potentialanhebung des N-Leiters bis in den Bereich gefährlicher Berührungsspannung wirksam verhindert werden. In Verbindung mit Fehlerstromschutzschaltern und Leitungsschutzschaltern herkömmlicher Art kann ein umfassender und zuverlässiger Personen- und Sachschutz gewährleistet werden.

Die Erfindung soll nun anhand von in der Zeichnung grob schematisch wiedergegebenen Ausführungsbeispielen näher erläutert werden:
In FIG 1 ist ein Gleichspannungsnetz bei Einsatz einer defekten Arbeitsmaschine veranschaulicht, die an einem Drehstromnetz angeschlossen ist, das von einem übergeordneten Drehstromnetz gespeist wird.
In FIG 2 ist ein allstromsensitiver Fehlerstromschutzschalter ohne Schalteinrichtung im N-Leiter-Pfad grob schematisch veranschaulicht.

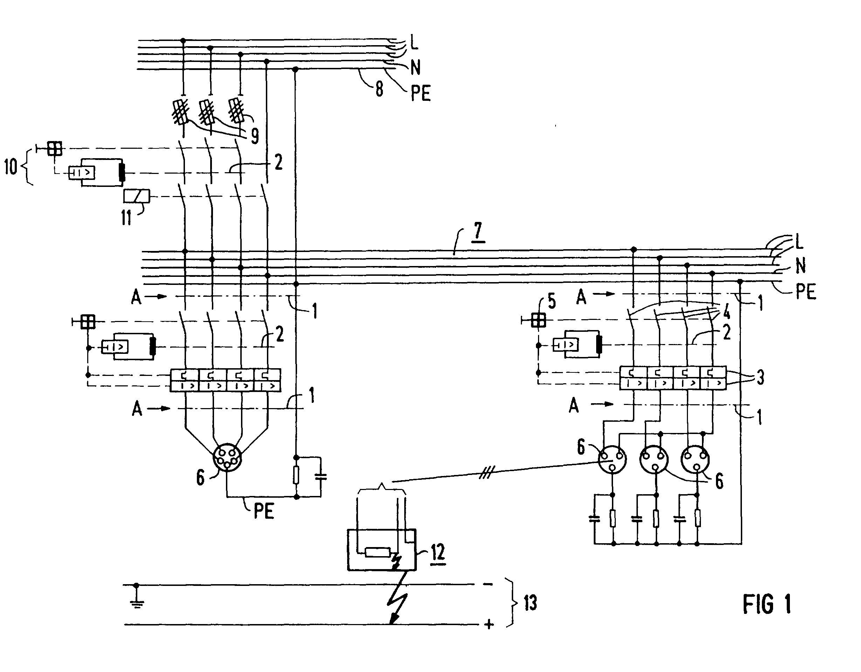

Die Fehlerstromschutzschaltung nach FIG 1 arbeitet mit einem allstromsensitiven Fehlerstromschutzschalter A, der an den Schnittstellen 1 vor oder hinter einer Schutzschalterkombination aus Fehlerstromschutzschalter 2 und Leitungsschutzschalter 3 eingesetzt werden kann. Das auf Schaltkontakte 4 einwirkende Schaltschloß 5 ist im Ausführungsbeispiel beiden Schutzschaltern gemeinsam. Auf das Schaltschloß 5 wirken thermische und magnetische Auslöser des Leitungsschutzschalterbauteils 3 und der Auslöser am Summenstromwandler des Fehlerstromschutzschalters 2 ein. In einem Drehstromsystem sind Steckdosen 6 angeordnet. Die einzelnen Steckdosen 6 können längs eines Drehstromnetzes 7, mit den Außenleitern L 1, L 2, L 3, dem Neutralleiter N und dem Schutzleiter PE angeschlossen sein. Das Drehstromnetz 7 kann von einem übergeordneten Drehstromnetz 8 versorgt sein, in dem Sicherungen, beispielsweise NH-Sicherungen 9, und ein übergeordneter Fehlerstromschutzschalter 10 sowie ein Schütz 11 angeordnet sind. Die Beschaltung in den Steckdosenkreisen mit Widerständen, beispielsweise 15 kOhm, und Kapazitäten, beispielsweise 6 µF, ist in derartigen Drehstromnetzen aus Sicherheitsgründen üblich.

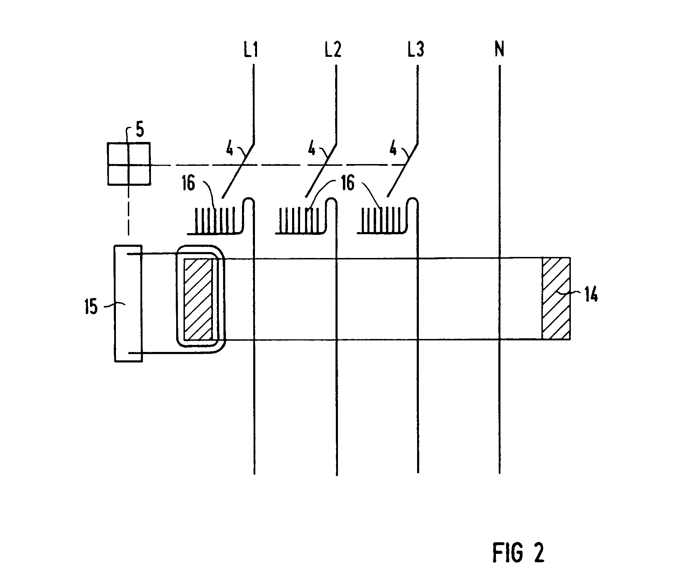

Eine Arbeitsmaschine 12 für Arbeiten an einem Gleichspannungsnetz 13 einer Bahn weist einen inneren Kurzschluß zwischen dem N-Leiter und dem PE-Leiter auf. Wenn das Gehäuse der defekten Arbeitsmaschine 12 mit einem Potential führenden Teil des Gleichspannungsnetzes 13 im stromleitende Berührung kommt, beispielsweise durch Auflegen auf einer Gleichspannung führenden Schiene einer Bahn, können hohe Gleichströme über den N-Leiter der Arbeitsmaschine und des Drehstromsystems abfließen. Diese werden von einem vorgeordneten herkömmlichen pulsstromsensitiven Fehlerstromschutzschalter 2 gegebenenfalls nicht erkannt. Ein vor- oder nachgeschalteter allstromsensitiver Fehlerstromschutzschalter A, der in FIG 2 grob schematisch veranschaulicht ist, kann derartige Gleichströme erkennen und die zur Überwachung durch seinen Summenstromwandler 14 durchgeführten Außenleiter, im Ausführungsbeispiel L 1 bis L 3, abschalten.

In FIG 2 ist ein Summenstromwandler 14, eine Auslöseeinrichtung 15 und ein Schaltschloß 5 zusammen mit Schaltkontakten 4 und Löschkammern 16 veranschaulicht. Hinzu kommen übliche elektronische Mittel und Vorkehrungen, um allstromsensitiv Fehlerströme erfassen zu können.

## Patentansprüche

1. Fehlerstromschutzschaltung in Drehstromsystemen (7, 8), die in der Nähe von Gleichspannungssystemen (13) betrieben wird, wie sie beispielsweise elektrische Bahnen aufweisen, wobei allstromsensitive Fehlerstromschutzschalter oder Differentialstromschutzschalter eingesetzt sind, nachstehend hier als Fehlerstromschutzschalter zusammengefaßt, die im Prinzip mit einem allstromsensitiven Fehlerstromerfassungssystem, einer Auslöseeinrichtung (15), Schaltschloß (5), Schaltkontakten (4) und Schaltkammer (16) in zu überwachenden Leitern arbeiten,
**dadurch gekennzeichnet,**
daß der allstromsensitive Fehlerstromschutzschalter im Neutralleiterpfad (N) ohne Schaltkontakte und Schaltkammer durchverbunden ist und daß die Gleichstromschaltleistung durch einen Gleichstromschutzschalter sichergestellt ist.

2. Fehlerstromschutzschaltung nach Anspruch 1,
**dadurch gekennzeichnet,**
daß der Neutralleiter (N) starr geerdet ist.

3. Fehlerstromschutzschaltung nach Anspruch 1 oder 2,
**dadurch gekennzeichnet,**
daß der allstromsensitive Fehlerstromschutzschalter (A) in Reihe zu einem pulsstromsensitiven und/oder wechselstromsensitiven Fehlerstromschutzschalter (2) herkömmlicher Art und gegebenenfalls einem Leitungsschutzschalter (3) oder einer Gerätekombination aus Leitungsschutzschalter mit Fehlerstromauslösung, sogenannte FI/LS-Schalter, eingesetzt ist.

## Claims

1. Fault current circuit breaker system in three-phase systems (7, 8), which is operated in the vicinity of d.c. voltage systems (13), of the type found, for example, in electric railway tracks, wherein d.c.-a.c.-sensitive fault current circuit breakers or differential current circuit breakers are used, hereinafter brought together as fault current circuit breakers, which basically operate with an a.c.-d.c.-sensitive fault current detection system, a tripping device (15), latching mechanism (5), switching contacts (4) and interrupter chambers (16) in conductors to be monitored,
characterised in that the a.c.-d.c.-sensitive fault current circuit breaker is connected in the neutral conductor path (N) without switching contacts and interrupter chambers and in that the d.c. switching capacity is ensured by a d.c. circuit breaker.

2. Fault current circuit breaker system according to claim 1, characterised in that the neutral conductor (N) is solidly earthed.

3. Fault current circuit breaker system according to claim 1 or 2, characterised in that the a.c.-d.c.-sensitive fault current circuit breaker (A) is connected in series with a pulse-current-sensitive and/or alternating current-sensitive fault current circuit breaker (2) of a conventional type and optionally with a miniature circuit breaker (3) or a combination of devices consisting of miniature circuit breakers with fault current tripping, so-called current-operated earth leakage circuit breakers.

## Revendications

1. Circuit de courant de défaut à la terre dans des systèmes triphasés (7, 8), qui fonctionne à proximité de systèmes de tension continue (13) comme en comportent par exemple des voies ferrées électriques, dans lequel on utilise des disjoncteurs à courant différentiel résiduel tous-courants ou des disjoncteurs à courant de défaut tous-courants, regroupés ensuite ici sous le terme de disjoncteurs à courant de défaut, qui fonctionnent en principe avec un système de détection de courant de défaut sensible à tous les courants, avec un dispositif de déclenchement (15), avec un verrou de maintien (5), avec des contacts de commutation (4) et avec des chambres d'extinction (16) dans les conducteurs à surveiller,
caractérisé par le fait que le disjoncteur à courant de défaut tous-courants est relié directement dans le chemin du conducteur neutre (N) sans contact de commutation ni chambre de commutation et que la puissance de coupure de courant continu est assurée par un disjoncteur de courant continu.

2. Circuit de courant de défaut à la terre selon la revendication 1,
caractérisé par le fait que le conducteur neutre (N) est constamment mis à la terre.

3. Circuit de courant de défaut à la terre selon la revendication 1 ou 2,
caractérisé par le fait que le disjoncteur à courant de défaut tous-courants (A) est placé en série avec un disjoncteur à courant de défaut (2) sensible au courant pulsé et/ou au courant alternatif du type habituel et éventuellement avec un disjoncteur de protection de ligne (3) ou avec une combinaison d'appareils formée de disjoncteurs de protection de ligne avec déclenchement à courant de défaut, appelés disjoncteurs FI/LS.
